**Europäisches Patentamt**

**European Patent Office**

**Office européen des brevets**

(19)

(11) Veröffentlichungsnummer : **0 100 001**
**B1**

(12) **EUROPÄISCHE PATENTSCHRIFT**

(45) Veröffentlichungstag der Patentschrift :
28.08.85

(21) Anmeldenummer : 83106528.9

(22) Anmeldetag : 05.07.83

(51) Int. Cl.⁴ : **B 32 B 17/06, E 04 B 1/94,
E 06 B 5/16, F 26 B 3/02,
C 03 C 27/12**

(54) **Verfahren zur Herstellung einer lichtdurchlässigen, festen Brandschutzschicht aus einem blähbaren Material.**

(30) Priorität : 20.07.82 DE 3227057

(43) Veröffentlichungstag der Anmeldung :
08.02.84 Patentblatt 84/06

(45) Bekanntmachung des Hinweises auf die Patenterteilung : 28.08.85 Patentblatt 85/35

(84) Benannte Vertragsstaaten :
AT BE CH FR GB IT LI LU NL SE

(56) Entgegenhaltungen :
DE-A- 2 637 351
DE-A- 2 752 543
DE-A- 3 012 973

(73) Patentinhaber : FLACHGLAS AKTIENGESELL-SCHAFT
Otto-Seeling-Promenade 10-14
D-8510 Fürth (DE)

(72) Erfinder : Nolte, Hans.Henning, Dipl.-Phys.
Beethovenstrasse 29
D-4650 Gelsenkirchen (DE)

(74) Vertreter : Andrejewski, Walter et al
Patentanwälte Andrejewski, Honke & Partner Postfach 10 02 54 Theaterplatz 3
D-4300 Essen 1 (DE)

EP 0 100 001 B1

**Beschreibung**

Die Erfindung bezieht sich gattungsgemäß auf ein Verfahren zur Herstellung einer lichtdurchlässigen, festen Brandschutzschicht aus einem blähbaren Material, wobei auf ein Substrat eine Schicht aus einem im Wasser gelösten hydratisierten Alkalimetallsilikat, die einen Hilfsstoff aufweisen kann, aufgebracht und diese Schicht im Kontakt mit einer Trocknungsatmosphäre erwärmt und getrocknet wird, so daß eine feste Brandschutzschicht aus hydratisiertem Alkalimetallsilikat auf dem Substrat bleibt. Hilfsstoffe sind z. B. Harnstoff, mehrwertige Alkohole, Monosaccharide, Polysaccharide, Natriumphosphat, Natriumaluminat, Aluminiumphosphat, Borax, Borsäure oder kolloidales Siliciumdioxid. Der Ausdruck Brandschutzschicht wird verwendet, weil die feste Schicht, mag sie auch plattenförmigen Charakter haben, im allgemeinen als Schicht zwischen Glasscheiben angeordnet sind, wobei das so hergestellte Aggregat insgesamt als Brandschutzwand oder Brandschutzwandbauteil eingesetzt wird. Das Substrat kann folglich eine Glasscheibe sein, kann aber auch als Folie ausgebildet sein. Die feste Brandschutzschicht bleibt bei der Weiterverarbeitung auf dem Substrat oder wird zum Zwecke der Weiterverarbeitung zur Brandschutzwand bzw. zum Brandschutzwandbauteil von dem Substrat abgenommen. Die Trocknung erfolgt in einer Trocknungskammer.

Bei dem bekannten gattungsgemäßen Verfahren (DE-OS 2 833 718) besteht die Trocknungsatmosphäre aus Umgebungsluft. In der festen Brandschutzschicht entstehen schon beim Trocknen oder danach im eingebauten Zustand durch Alterung infolge von Licht- oder Wärmeeinwirkung, z. B. durch UV-Einstrahlung, Blasen und Mikroblasen, die optisch außerordentlich stören. auch wird häufig selbst beim vorsichtigen Trocknen Rißbildung beobachtet. Um diese Phänomene zu unterdrücken, ist es bekannt, dem hydratisierten Alkalimetallsilikat die genannten Hilfsstoffe beizumischen (DE-OS 2 833 718). Nichtsdestoweniger wird, alterungsabhängig, Blasenbildung beobachtet.

Der Erfindung liegt die Aufgabe zugrunde, das gattungsgemäße Verfahren so zu führen, daß bei der Trocknung weder Blasenbildung noch Rißbildung auftreten und daß auch alterungsabhängig sowie unter starker UV-Einstrahlung eine Blasenbildung nicht mehr eintritt.

Zur Lösung dieser Aufgabe lehrt die Erfindung, daß mit einer Trocknungsatmosphäre gearbeitet wird, die zumindest 30 Vol.-% freien Sauerstoff enthält. Sauerstoff meint im Rahmen der Erfindung stets möglichst reinen Sauerstoff, Rest von bei technisch reinem Sauerstoff üblichen Beimischungen stören jedoch nicht. Die Trocknungsatmosphäre kann vollständig aus freiem Sauerstoff bestehen. Nach bevorzugter Ausführungsform der Erfindung enthält die Trocknungsatmosphäre jedoch außerdem Wasserdampf. Das ist für die praktische Durchführung von Bedeutung. Man kann in diesem Falle eine Trocknungskammer (in der die Trocknung durchgeführt wird) zunächst auf 100 °C erwärmen, die Luft aus der Trocknungskammer mit Wasserdampf austreiben und danach Sauerstoff einführen. Im Rahmen der Erfindung können der Sauerstoff enthaltenden Trocknungsatmosphäre in einer Menge von insgesamt maximal 15 Vol.-% eines der Gase Argon, Stickstoff, Schwefelhexafluorid oder Mischung davon beigegeben werden. In der Praxis bewährt hat sich eine Ausführungsform, die dadurch gekennzeichnet ist, daß die Trocknungsatmosphäre etwa 40 Vol.-% Sauerstoff, etwa 15 Vol.-% Stickstoff und etwa 45 Vol.-% Wasserdampf, Rest übliche Verunreinigungen, enthält. Die Trocknungsatmosphäre kann aber auch neben Sauerstoff (und gegebenenfalls Wasserdampf), in einer Menge von maximal 70 Vol.-% Helium oder ein anderes Gas enthalten, dessen Atome oder Moleküle sich in der Alkalimetallsilikatschicht leichter bewegen als Wasserdampfmoleküle.

Die erreichten Vorteile sind darin zu sehen, daß nach dem erfindungsgemäßen Verfahren hergestellte Brandschutzschichten eine Blasenbildung nicht mehr zeigen, und zwar weder bei der Trocknung noch alterungsabhängig. Auch Rißbildung wird nicht beobachtet. Diese Vorteile sind überraschend, da die herrschende Lehre dahingeht (DE-OS 30 12 969) Sauerstoff von der zu trocknenden Schicht fernzuhalten und zumindest während eines Teiles der Trocknungsperiode in die Atmosphäre, die sich in Kontakt mit der Schicht befindet, ein Gas oder mehrere Gase einzuführen, die in dem blähfähigen Material weniger löslich sind als Sauerstoff. Während all diese bekannten Maßnahmen nicht befriedigen, kommt die Erfindung reproduzierbar zur Lösung der zugrundeliegenden Aufgabe.

Im einzelnen bestehen mehrere Möglichkeiten zur Durchführung des erfindungsgemäßen Verfahrens. Stets empfiehlt es sich, aus der Trocknungsatmosphäre freigewordenen Wasserdampf zu entfernen. Ein Vorschlag der Erfindung geht dazu dahin, daß die Trocknungsatmosphäre bei der Trocknung im Umlauf geführt und auf dem Umlaufweg aus der Trocknungsatmosphäre aufgenommenes Wasser entfernt wird. Man kann aber auch die Trocknung in einer Trocknungskammer durchführen, die zumindest eine semipermeable Membran aufweist, die für Wasserdampf, nicht aber für Sauerstoff und möglichst nicht für das beigemischte Gas oder die beigemischten Gase, durchlässig ist, und daß bei der Trocknung freigewordener Wasserdampf über die semipermeable Membran abgeführt wird. Im einfachten Falle ist eine solche Trocknungskammer eine Trocknungshaube.

Auch in Rahmen der Erfindung kann mit Hilfsstoffen gearbeitet werden. Überraschenderweise kann aber auf die Beigabe solcher Hilfsstoffe und insbesondere auf die Beigabe von Glyzerin verzichtet werden. Im allgemeinen stört es nicht, daß die Umgebungsluft in Kontakt kommt, gleichgültig wie der übliche Feuchtigkeitsgehalt dieser Umgebungsluft ist.

Im folgenden wird die Erfindung anhand von Ausführungsbeispielen, die sich auf das Arbeiten in einer Sauerstoffatmosphäre beziehen, ausführlicher erläutert.

### Beispiel 1

Trocknung im O₂-Strom (4 l/min), Trockentemperatur 80 °C, Aufgußmenge 3,7 l Wasserglas/m² kein Zusatz, beschichtete Fläche ca. 0,33 m², Trockenzeit ca. 15 h. — Die erhaltenen Schichten waren sehr glatt und frei von Bläschen. Nach dem Verbund und bei anschließender Alterung bei 95 °C starker UV-Bestrahlung wurde im Gegensatz zur konventionellen Trocknung keine Bläschenbildung beobachtet.

### Beispiel 2

Trocknung unter semipermeabler Haube (Haube mit O₂ gefüllt, anschließend wurde über eine Rohrleitung aufgegossen), Trockentemperatur 80 °C, Aufgußmenge 3,7 l Wasserglas-Glyzeringemisch/m², beschichtete Fläche ca. 0,33 m² Trockenzeit ca. 40 h. — Die erhaltenen Schichten waren sehr glatt und frei von Bläschen. Alterungsversuche bei hohen Temperaturen führten nicht zur sonst stets beobachteten Blasenbildung.

Arbeitet man, wie angegeben, mit Beimischungen zu der Sauerstoffatmosphäre, so kommt man zu sehr ähnlichen Ergebnissen.

### Patentansprüche

1. Verfahren zur Herstellung einer lichtdurchlässigen, festen Brandschutzschicht aus einem blähbaren Material, wobei auf ein Substrat eine Schicht aus einem in Wasser gelösten hydratisierten Alkalimetallsilikat, die einen Hilfsstoff aufweisen kann, aufgebracht und diese Schicht im Kontakt mit einer Trocknungsatmosphäre erwärmt und getrocknet wird, so daß eine feste Brandschutzschicht aus hydratisiertem Alkalimetallsilikat auf dem Substrat bleibt, dadurch gekennzeichnet, daß mit einer Trocknungsatmosphäre gearbeitet wird, die zumindest 30 Vol.-% freien Sauerstoff enthält.

2. Verfahren nach Anspruch 1, dadurch gekennzeichnet, daß die Trocknungsatmosphäre außerdem Wasserdampf enthält.

3. Verfahren nach einem der Ansprüche 1 oder 2, dadurch gekennzeichnet, daß die Trocknungsatmosphäre in einer Menge von insgesamt maximal 15 Vol.-% eines der Gase Argon, Stickstoff, Schwefelhexafluorid oder Mischungen davon enthält.

4. Verfahren nach Anspruch 3, dadurch gekennzeichnet, daß die Trocknungsatmosphäre etwa 40 Vol.-% Sauerstoff, etwa 15 Vol.-% Stickstoff und etwa 45 Vol.-% Wasserdampf, Rest übliche Verunreinigungen, enthält.

5. Verfahren nach einem der Ansprüche 1 oder 2, dadurch gekennzeichnet, daß die Trocknungsatmosphäre außerdem in einer Menge von maximal 70 Vol.-% Helium enthält.

6. Verfahren nach einem der Ansprüche 1 bis 5, dadurch gekennzeichnet, daß die Trocknungsatmosphäre im Umlauf geführt und auf dem Umlaufweg aus der Trocknungsatmosphäre aufgenommenes Wasser entfernt wird.

7. Verfahren nach einem der Ansprüche 1 bis 5, dadurch gekennzeichnet, daß die Trocknung in einer Trocknungskammer durchgeführt wird, die zumindest eine semipermeable Membran aufweist, die für Wasserdampf, nicht aber für Sauerstoff und möglichst nicht für das beigemischte Gas oder die beigemischten Gase, durchlässig ist, und daß bei der Trocknung freigewordener Wasserdampf über die semipermeable Membran abgeführt wird.

### Claims

1. A process for the production of a transparent, solid fireproof coating of an inflatable material, in which a coating of an aqueous solution of a hydrated alkali metal silicate, which may possess an auxiliary agent, is applied to a substrate, and this coating is heated and dried in contact with a drying atmosphere so that a solid fireproff coating of hydrated alkali metal silicate remains on the substrate, characterized in that a drying atmosphere that contains at least 30 % by volume of free oxygen is used for the process.

2. A process according to Claim 1, characterized in that the drying atmosphere also contains water vapour.

3. A process according to one of Claims 1 or 2, characterized in that the drying atmosphere contains a maximum volume of 15 % in total of one of the gases argon, nitrogen, sulphur hexafluoride, or mixtures thereof.

4. A process according to Claim 3, characterized in that the drying atmosphere contains approximately 40 % by volume of oxygen, approximately 15 % by volume of nitrogen and approximately 45 % by volume of water vapour, the remainder being the normal impurities.

5. A process according to one of Claims 1 or 2, characterized in that the drying atmosphere additionally contains a maximum quantity of 70 % by volume of helium.

6. A process according to one of Claims 1 to 5, characterized in that the drying atmosphere is recycled and in its recycling path water removed from the drying atmosphere is carried away.

7. A process according to one of Claims 1 to 5, characterized in that the drying is carried out in a drying chamber that possesses at least one semipermeable membrane that is permeable to water vapour but not to oxygen and as far as possible not to the added gas or gases, and that the water vapour released during drying is carried away via the semi-permeable membrane.

## Revendications

1. Procédé de fabrication d'une couche translucide solide résistant au feu d'une matière intumescente, un substrat étant revêtu d'une couche de silicate alcalin métallique hydraté dissous dans l'eau qui peut comprendre un adjuvant et cette couche étant chauffée et séchée au contact d'une atmosphère de séchage de telle façon qu'une couche solide de silicate alcalin métallique hydraté résistant au feu subsiste sur le substrat, caractérisé par le fait que l'atmosphère de séchage mise en œuvre contient au moins 30 % en volume d'oxygène libre.

2. Procédé selon la revendication 1, caractérisé par le fait que l'atmosphère de séchage contient, en plus, de la vapeur d'eau.

3. Procédé selon l'une des revendications 1 ou 2, caractérisé par le fait que l'atmosphère de séchage contient une quantité maximale de 15 % en volume de l'un des gaz argon, azote, hexafluorure de soufre ou des mélanges de ces gaz.

4. Procédé selon la revendication 3, caractérisé par le fait que l'atmosphère de séchage contient environ 40 % en volume d'oxygène, environ 15 % en volume d'azote et environ 45 % en volume de vapeur d'eau avec comme reste les impuretés habituelles.

5. Procédé selon l'une des revendications 1 ou 2, caractérisé par le fait que l'atmosphère de séchage contient, en outre, une quantité maximale de 70 % en volume d'hélium.

6. Procédé selon l'une quelconque des revendications 1 à 5, caractérisé par le fait que l'atmosphère de séchage est mise en circulation et que l'eau absorbée est éliminée de l'atmosphère de séchage sur le parcours de celle-ci.

7. Procédé selon l'une quelconque des revendications 1 à 5, caractérisé par le fait que le séchage est effectué dans une chambre de séchage qui comporte au moins une membrane semi-perméable qui laisse passer la vapeur d'eau mais non pas l'oxygène et autant que possible pas non plus le ou les gaz ajoutés, et que la vapeur d'eau dégagée pendant le séchage est éliminée par l'intermédiaire de la membrane semi-perméable.